# FASCICULE DE BREVET EUROPEEN

(11) **EP 0 608 183 B1**
(45) Date de publication et mention de la délivrance du brevet: **06.11.1996**
(21) Numéro de dépôt: 94400128.8
(22) Date de dépôt: 21.01.1994
(51) Int. Cl.: A01B 73/04

(54) **Véhicule notamment agricole comprenant des organes de travail supportés par un châssis, un train de roulement, et des moyens de liaison reliant ledit train de roulement au châssis**
Insbesondere landwirtschaftliches Fahrzeug, umfassend von einem Untergestell getragene Arbeitsorgane und einen Rädersatz, sowie Verbindungsmittel zwischen Untergestell und Rädersatz
Especially agricultural vehicle, comprising undercarriage supported working tools, a wheel train, and means connecting said wheel train to the undercarriage

(30) Priorité: 21.01.1993 FR 9300591
(43) Date de publication de la demande: 27.07.1994
(73) Titulaire: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel

(56) Documents cités:
- EP-A- 0 514 302
- FR-A- 2 128 153
- US-A- 4 126 189
- US-A- 4 986 367

## Description

La présente invention a pour objet un véhicule supportant des organes de travail disposés en travers du véhicule sur une largeur importante, ledit véhicule devant pouvoir se déplacer sur route ainsi que sur son lieu de travail (voir p. ex. FR-A-2128153).

La présente invention a en particulier pour objet des véhicules agricoles connus sous la dénomination anglaise de "covercrop" qui sont munis de charrues, notamment à disques, ou d'organes de travail tels que des broyeurs ou des appareils combinés pour la préparation des sols.

Ces véhicules sont généralement remorqués par des tracteurs.

Ils comportent le plus souvent des dispositifs qui permettent de déplacer le châssis par rapport aux roues pour leur permettre, soit d'être déplacés sur route ou dans les champs, soit d'effectuer leur travail.

De tels véhicules sont destinés le plus souvent à supporter des organes de travail portés par au moins une poutre dirigée selon une direction inclinée par rapport à la direction d'avance du véhicule.

Il en résulte que les véhicules munis de leurs organes de travail sont encombrants, ce qui pose des problèmes pour leur déplacement sur route en raison de la réglementation qui limite la largeur des véhicules.

La présente invention a pour but de réaliser un véhicule de ce type qui soit d'une construction simple et d'un prix de revient économique et qui permette de résoudre les problèmes posés par l'encombrement du véhicule durant ses différents déplacements.

La présente invention a pour objet un véhicule notamment agricole comprenant un châssis supportant les organes de travail, un train de roulement et des moyens de liaison reliant ledit train de roulement au châssis, caractérisé par le fait que lesdits moyens de liaison sont aptes à provoquer le déplacement du train de roulement par rapport au chassis entre une première position basse de travail dans laquelle les organes de travail assurent leur fonction tandis que le train de roulement est soulevé au dessus du sol, et une deuxième position haute de déplacement dans laquelle les organes de travail sont soulevés par rapport au sol sur lequel repose le train de roulement, lesdits moyens de liaison étant également aptes à assurer le pivotement du châssis autour d'un axe sensiblement horizontal entre la deuxième position de déplacement et une troisième position de transport routier dans laquelle le châssis est placé dans un plan incliné par rapport à l'horizontale tandis que le train de roulement prend appui sur le sol, à fin de réduire l'encombrement en largeur du véhicule.

Selon un mode de réalisation préféré de l'invention, le châssis est relié au train de roulement par deux éléments dont chacun est articulé à une de ses extrémités au train de roulement et à l'autre de ses extrémités au châssis en formant un parallélogramme, un moyen tel qu'un vérin assurant la déformation du parallélogramme entre la première position basse de travail et la deuxième position haute de déplacement.

Dans un mode de réalisation préféré de l'invention, un des éléments articulé à ses extrémités, d'une part sur le châssis, et d'autre part sur le train de roulement, comporte des moyens tels qu'un vérin permettant de faire varier sa longueur utile afin de faire basculer le châssis entre sa deuxième position haute de déplacement et sa troisième position inclinée de transport routier.

Dans un mode de réalisation préféré, la déformation du parallélogramme qui permet de passer de la première position basse de travail à la deuxième position haute de déplacement, est assurée à l'aide d'un vérin hydraulique.

Selon un mode de réalisation particulier un des éléments constituant le parallélogramme peut être équipé d'un moyen permettant de faire varier sa longueur afin de pouvoir régler l'horizontalité du châssis. Ce moyen peut être par exemple une vis ou un excentrique.

Selon un mode de réalisation particulier de l'invention, un élément rigide du parallélogramme est constitué par un cadre sensiblement rectangulaire qui présente l'avantage de rigidifier l'assemblage du châssis au train de roulement et de permettre le passage d'une roue du train de roulement à l'intérieur dudit cadre lorsque le véhicule selon l'invention est en position basse de travail.

Conformément à l'invention, il est avantageux de réaliser l'élément à longueur variable du parallélogramme qui relie le train de roulement au châssis, à l'aide d'un vérin hydraulique à deux positions de butée, l'une d'elles correspondant à une longueur qui est égale à celle de l'élément rigide du parallélogramme, tandis que l'autre correspond à la position du châssis pour le transport routier.

Selon un mode de réalisation perfectionné de l'invention, il est intéressant de prévoir un moyen pour modifier la longueur maximale de l'élément à longueur variable en fonction de la nature et de la longueur des outils qui sont supportés par le châssis.

Dans une variante de l'invention, le châssis est constitué en deux parties articulées autour d'un axe longitudinal, de manière à ce qu'une des parties puisse être repliée contre l'autre en position de déplacement ou de transport routier, de manière à réduire l'encombrement du véhicule.

Selon un mode de réalisation préféré de l'invention, le point d'attache du châssis sur le tracteur est placé dans l'alignement de l'axe d'articulation de l'élément rigide du parallélogramme sur le train de roulement, ce qui permet de maintenir les longerons du châssis en position sensiblement horizontale quel que soit le positionnement du châssis par rapport au train de roulement.

On voit que l'invention permet de résoudre d'une manière simple et économique les problèmes qui sont posés par les nécessités de fonctionnement de ce type de véhicule.

De surcroît, la structure du véhicule selon l'invention permet de rapprocher l'une de l'autre les poutres supportant les organes de travail et notamment de labour, ce qui limite le déport latéral de ces derniers en raison de la différence entre les couples qui sont exercés par les outils qui sont à l'avant et par ceux qui sont à l'arrière du véhicule.

Dans le but de mieux faire comprendre l'invention on va en décrire maintenant à titre d'illustration et sans aucun caractère limitatif un mode de réalisation pris comme exemple et représenté sur le dessin annexé dans lequel :
- la figure 1 est une vue schématique en élévation arrière d'un mode de réalisation de l'invention, le châssis étant dans sa deuxième position haute de déplacement,
- la figure 2 est une vue schématique correspondant à la figure 1 dans laquelle le châssis est dans sa première position basse de travail,
- la figure 3 est une vue schématique correspondant aux figures 1 et 2, dans laquelle le châssis est dans sa troisième position inclinée de transport routier.
- la figure 4 est une vue schématique de dessus correspondant à la figure 2 mais à une échelle plus petite,
- la figure 5 est une vue schématique en perspective du véhicule selon la figure 4, les outils de travail n'étant pas représentés pour la clarté de cette figure et
- les figures 6 et 7 représentent en vue de dessus et en vue en élévation arrière, la variante selon laquelle le châssis est repliable sur lui-même.

On a schématiquement représenté sur le dessin le châssis 1 du véhicule qui est constitué dans le cas présent par deux longerons 2 et 3 réunis par quatre traverses 4.

Dans le mode de réalisation décrit, le train de roulement est constitué par un essieu 5 muni de deux roues 6, l'essieu 5 étant relié au châssis 1 par deux éléments pour former un quadrilatère.

Un premier élément rigide 7 est articulé à sa partie inférieure en 8 sur l'essieu 5 et à sa partie supérieure en 9 sur le châssis 1.

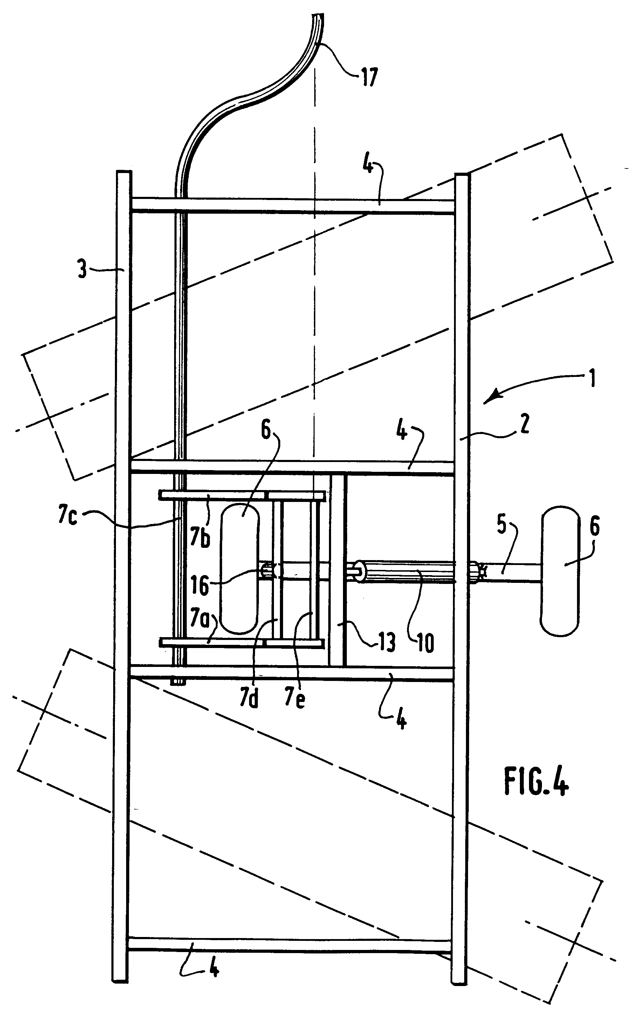

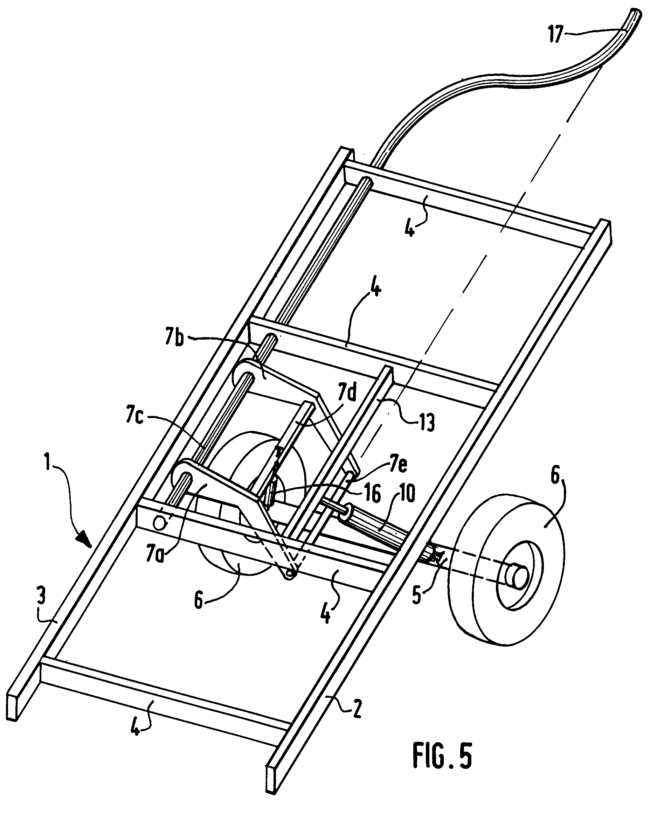

Comme on peut le voir sur les figures 4 et 5, dans le mode de réalisation décrit, l'élément 7 est constitué par un cadre comprenant deux bras rigides 7a et 7b solidaires d'un arbre 7c qui pivote longitudinalement par rapport au châssis 1 en tourillonnant dans les traverses 4.

Les deux bras 7a et 7b sont par ailleurs réunis entre eux par deux barreaux 7d et 7e qui contribuent à la rigidité du cadre 7, le barreau 7d servant d'appui au vérin 16 qui permet de basculer le train de roulement entre sa première et sa deuxième position, alors que le barreau 7e supporte l'articulation du cadre sur l'essieu 5.

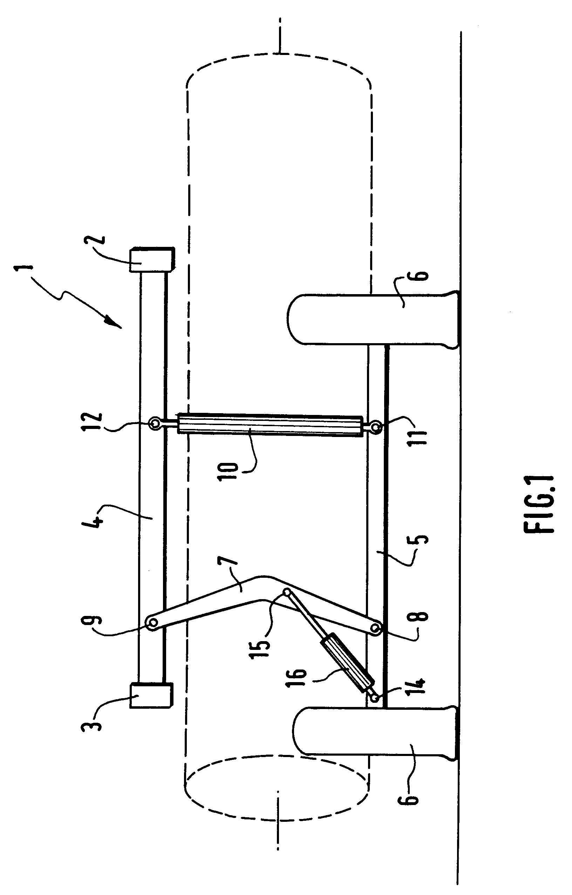

Comme on peut le voir sur les figures 1 à 4, le second élément à longueur variable du parallélogramme est constitué par un vérin 10 articulé en 11 sur l'essieu 5 et en 12 sur un barreau 13 reliant deux traverses 4 du châssis 1.

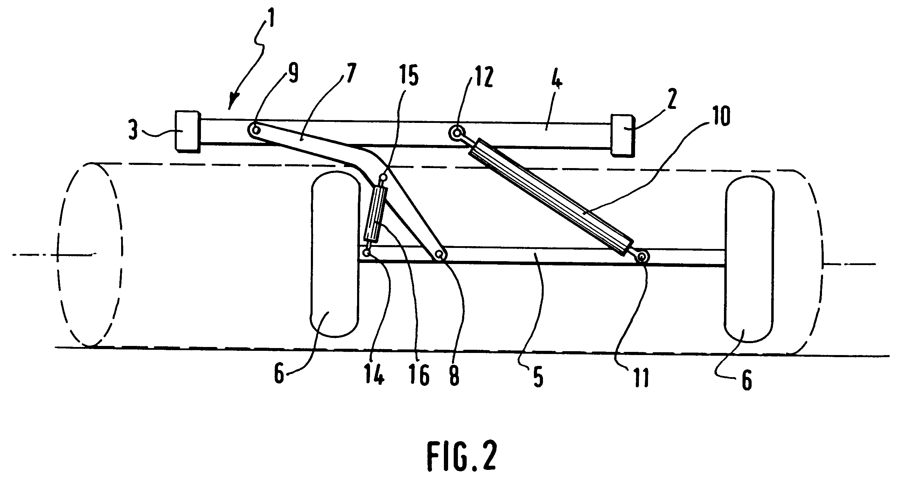

Le vérin 10 peut être placé dans une position rétractée pour laquelle la distance entre les points d'articulation 11 et 12 est égale à la distance entre les points d'articulation 8 et 9 du cadre 7, ce qui permet de déplacer le châssis entre sa position de déplacement représentée sur la figure 1 et sa position de travail représentée sur la figure 2.

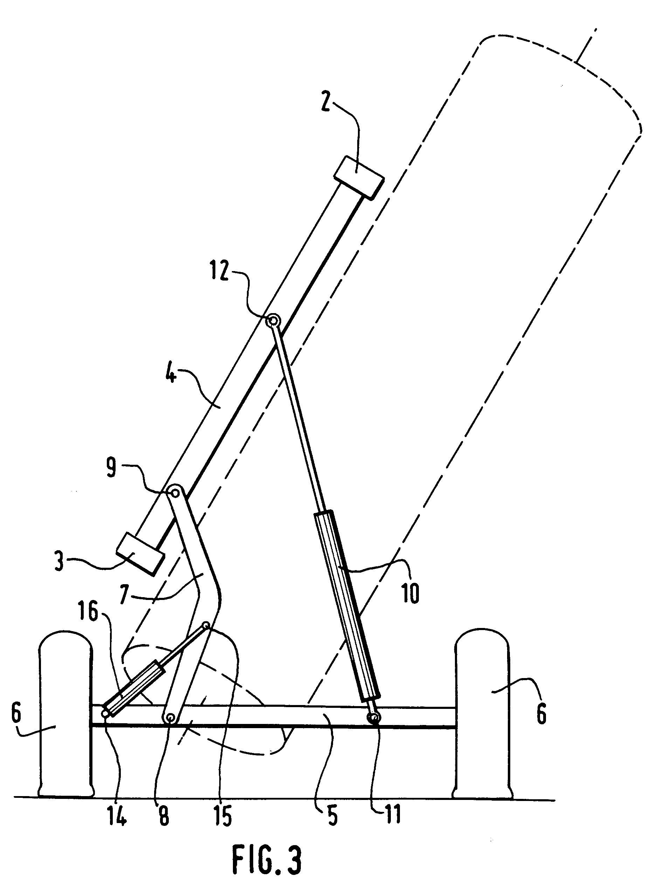

Le vérin 10 peut être également placé dans une position d'extension en lui donnant une longueur qui est notablement supérieure à celle qu'il occupe en position rétractée, afin de placer le châssis dans sa position inclinée de transport comme cela est représenté sur la figure 3.

Selon un mode de réalisation particulier de l'invention, il est avantageux de prévoir un dispositif qui permet de faire varier la longueur du vérin 10 à l'état d'extension de manière à faire varier l'inclinaison du châssis en position de transport routier.

Le vérin 10 est de préférence un vérin hydraulique. Il peut être avantageusement constitué par un vérin télescopique compte-tenu de la différence de longueur entre sa position étendue et sa position rétractée.

Un vérin 16 est articulé à une de ses extrémités au point 14 de l'essieu 5 et à son autre extrémité en 15 sur le barreau 7d du cadre 7.

On comprend dans ces conditions qu'il suffit d'agir sur ce vérin 16 pour faire passer le châssis 1 de la position de la figure 1 dans laquelle le véhicule est supporté par ses roues 6, à la position de la figure 2 dans laquelle le véhicule est supporté par les organes de travail qui ont été schématiquement représentés sur le dessin en traits interrompus, le train de roulement étant alors supporté par le châssis 1 et restant au-dessus du sol.

On a représenté sur la figure 3 la position du châssis qui correspond au transport sur route du véhicule, les organes de travail étant schématiquement représentés en traits interrompus.

Pour passer de la position de déplacement de la figure 1, dans laquelle le châssis est en position relevée, (le véhicule étant supporté par ses roues 6), à la position de transport sur route, il suffit de placer le vérin 10 en position d'extension sans modifier la position du vérin 16, ce qui provoque le basculement du châssis autour de l'axe longitudinal 9 avec pour effet de soulever et de ramener vers le centre l'extrémité droite des organes de travail.

On peut de cette manière ramener facilement l'encombrement latéral du véhicule à la largeur maximale prévue par la réglementation en vigueur.

La position inclinée du châssis permet également de limiter la hauteur du véhicule de sorte qu'elle reste compatible avec la hauteur maximale autorisée sur route.

Comme cela a été indiqué précédemment, on comprend que l'on peut facilement modifier la largeur et la hauteur de l'encombrement hors-tout du véhicule en agissant sur la longueur du vérin 10 en position d'extension.

Conformément à un mode de réalisation préféré de l'invention, le remorquage du véhicule s'effectue par l'extrémité avant 17 de l'arbre 7c qui supporte le cadre 7, cette extrémité avant 17 étant avantageusement située dans l'alignement de l'axe d'articulation (7e) du cadre 7 sur l'essieu 5, ce qui présente l'avantage de maintenir le châssis 1 en position sensiblement horizontale, tandis que l'on passe de la position de la figure 1 à celle de la figure 2 et inversement.

On voit également, notamment sur la figure 4, que le véhicule qui vient d'être décrit présente l'avantage de permettre aux deux poutres qui supportent les organes de travail, d'être placées relativement près l'une de l'autre, ce qui a pour effet de réduire la tendance de l'arrière du véhicule, à se déplacer latéralement sous l'action des réactions engendrées par les différents organes de travail.

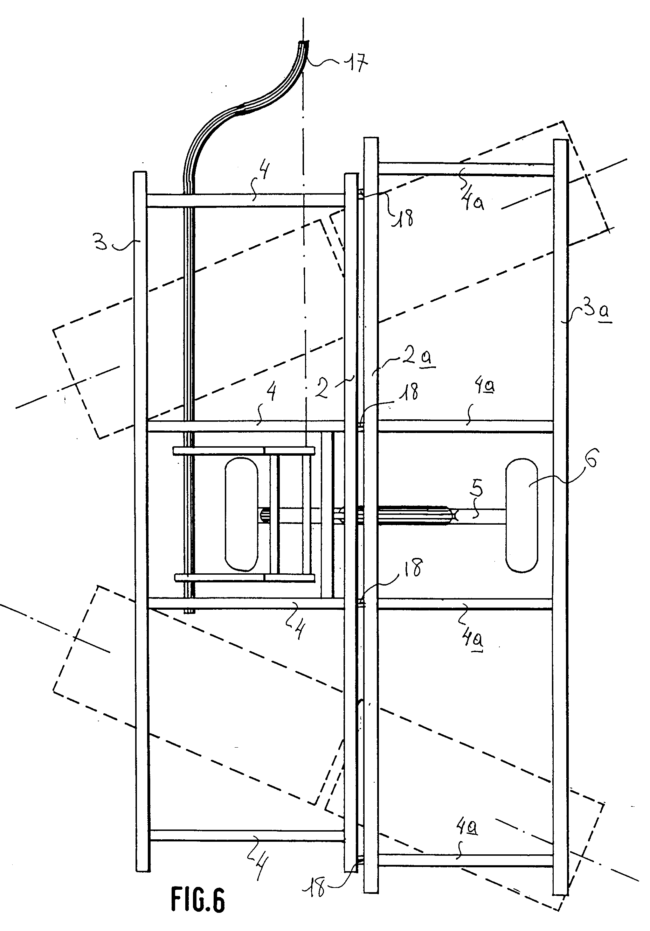

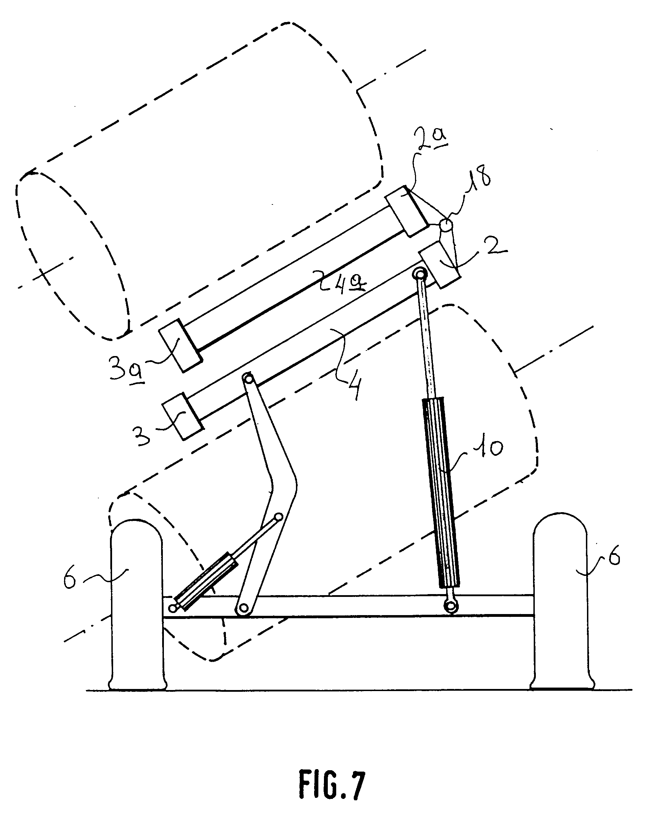

Dans la variante des figures 6 et 7, le châssis 1 est constitué en deux parties comportant chacune deux longerons (2,3 et 2a, 3a) réunis par des traverses (4 et 4a).

Ces deux parties sont articulées selon un axe longitudinal par des articulations 18 fixées aux longerons 2 et 2a.

Un moyen non représenté sur le dessin, tel par exemple qu'un vérin, permet de placer les deux parties du châssis 1 soit côte à côte en position de travail, soit de les replier l'une sur l'autre en position de transport ou de déplacement comme représenté sur la figure 7, ce qui permet de réduire notablement l'encombrement de l'engin.

Il est clair que le mode de réalisation qui vient d'être décrit n'est donné qu'à titre d'exemple.

Il va de soi que les variations de géométrie des moyens de liaison peuvent être obtenues autrement qu'avec des vérins hydrauliques, par exemple par des dispositifs à vis ou des engrenages.

## Revendications

1. Véhicule notamment agricole comprenant des organes de travail supportés par un châssis muni d'un train de roulement, et des moyens de liaison reliant ledit train de roulement au châssis, caractérisé par le fait que lesdits moyens de liaison (7,10,16) sont aptes à provoquer le déplacement du train de roulement (5,6) par rapport au châssis (3,4) entre une première position basse de travail (fig.2) dans laquelle les organes de travail assurent leur fonction tandis que le train de roulement (5,6) est soulevé au dessus du sol, et une deuxième position haute de déplacement (fig.1) dans laquelle les organes de travail sont soulevés par rapport au sol sur lequel repose le train de roulement (5,6), lesdits moyens de liaison (7,10,16) étant également aptes à assurer le pivotement du châssis (1) autour d'un axe (9) sensiblement horizontal entre la deuxième position de déplacement et une troisième position de transport routier (fig.3) dans laquelle le châssis (1) est placé dans un plan incliné par rapport à l'horizontale, tandis que le train de roulement prend appui sur le sol, à fin de réduire l'encombrement en largeur du véhicule.

2. Véhicule selon la revendication 1, caractérisé par le fait que le châssis (1) est relié au train de roulement (5,6) par deux éléments (7,10) dont chacun est articulé à une extrémité (8,11) au train de roulement (5,6) et à l'autre extrémité (9,12) au châssis (1) en formant un parallélogramme, un moyen tel qu'un vérin (16) assurant la déformation du parallélogramme entre la première position basse de travail (fig.2) et la deuxième position haute de déplacement (fig.1) du châssis.

3. Véhicule selon l'une des revendications 1 et 2, caractérisé par le fait que l'un des éléments (7) comporte un moyen tel qu'un vérin (10) lui permettant de faire varier sa longueur afin de basculer le châssis (1) entre sa deuxième position haute de déplacement (fig.1) et sa troisième position inclinée de transport routier (fig.3) et inversement.

4. Véhicule selon l'une quelconque des revendications 2 ou 3, caractérisé par le fait que la déformation du parallélogramme qui permet de passer de la première position basse de travail (fig.2) à la deuxième position haute de déplacement (fig.1), est assurée à l'aide d'un vérin hydraulique (16).

5. Véhicule selon l'une quelconque des revendications 2 à 4, caractérisé par le fait qu'un élément rigide (7) du parallélogramme est constitué par un cadre sensiblement rectangulaire (7a,7b,7c, 7d,7e) permettant le passage (6) d'une roue du train de roulement (5,6) à l'intérieur dudit cadre (7) lorsque le véhicule est en position basse de travail.

6. Véhicule selon l'une quelconque des revendications 2 à 5, caractérisé par le fait que l'élément à longueur variable du parallélogramme qui relie le train de roulement au châssis est réalisé à l'aide d'un vérin hydraulique (10) à deux positions de butée, l'une d'entre elles correspondant à une longueur qui est égale à celle de l'élément rigide (7) du parallélogramme, tandis que l'autre position correspond à la position de transport routier.

7. Véhicule selon l'une quelconque des revendications précédentes, caractérisé par le fait qu'un moyen (10) qui permet le basculement du châssis en position de transport sur route peut être réglé en extension en fonction de la nature et la longueur des outils qui sont supportés par le châssis.

8. Véhicule selon l'une quelconque des revendications 2 à 7, caractérisé par le fait que le point d'attache (17) du châssis sur le tracteur est placé dans l'alignement de l'axe d'articulation (8,7e) de l'élément rigide (7) du parallélogramme sur le train de roulement (5,6).

9. Véhicule selon l'une quelconque des revendications 2 à 8, caractérisé par le fait qu'un des éléments (10) du parallélogramme reliant le châssis (1) au train de roulement (5,6), est muni d'un moyen de réglage de sa longueur pour faire varier l'assise horizontale du châssis (1).

10. Véhicule selon l'une quelconque des revendications précédentes, caractérisé par le fait que le châssis est réalisé en deux parties susceptibles d'être repliées l'une contre l'autre en position de transport ou de déplacement.

## Claims

1. A vehicle, in particular an agricultural vehicle, comprising working elements supported by a chassis comprising an undercarriage and connecting means connecting the said undercarriage to the chassis, characterized in that the said connecting means (7, 10, 16) are capable of producing the displacement of the undercarriage (5, 6) relative to the chassis (3, 4) between a first low working position (Figure 2) wherein the working elements carry out their function while the undercarriage (5, 6) is raised above the ground, and a second high displacement position (Figure 1) wherein the working elements are raised relative to the ground whereon the undercarriage (5, 6) is resting, the said connecting means (7, 10, 16) being also capable of ensuring the pivoting of the chassis (1) round a substantially horizontal pin (9) between the second displacement position and a third road transport position (Figure 3) wherein the chassis (1) is placed into an inclined plane relative to the horizontal, while the undercarriage rests on the ground, so as to reduce the width dimension of the vehicle.

2. A vehicle according to claim 1, characterized in that the chassis (1) is connected to the undercarriage (5, 6) by two elements (7, 10), each of which is articulated at one end (8, 11) to the undercarriage (5, 6) and at the other end (9, 12) to the chassis (1), forming a parallelogram, a means such as a jack (16) ensuring the deformation of the parallelogram between the first low working position (Figure 2) and the second high displacement position of the chassis (Figure 1).

3. A vehicle according to one of claims 1 and 2, characterized in that one (7) of the elements has a means such as a jack (10), allowing it to cause its length to vary so as to tilt the chassis (1) between its second high displacement position (Figure 1) and its third inclined road transport position (Figure 3) and vice versa.

4. A vehicle according to any one of claims 2 or 3, characterized in that the deformation of the parallelogram which makes it possible to pass from the first low working position (Figure 2) to the second high displacement position (Figure 1) is ensured by means of a hydraulic jack (16).

5. A vehicle according to any one of claims 2 to 4, characterized in that a rigid element (7) of the parallelogram is constituted by a substantially rectangular frame (7a, 7b, 7c, 7d, 7e) allowing a wheel (6) of the undercarriage (5, 6) to pass inside the said frame (7) when the vehicle is in its low working position.

6. A vehicle according to any one of claims 2 to 5, characterized in that the element with a variable length of the parallelogram, which connects the undercarriage to the chassis is obtained by means of a hydraulic jack (10) with two stop positions, one of them corresponding to a length which is equal to that of the rigid element (7) of the parallelogram, while the other position corresponds to the road transport position.

7. A vehicle according to any one of the preceding claims, characterized in that a means (10) which allows the chassis to be tilted into the road transport position may be adjusted in its reach according to the nature and length of the tools which are supported by the chassis.

8. A vehicle according to any one of claims 2 to 7, characterized in that the attachment point (17) of the chassis to the tractor is placed in alignment with the hinge pin (8, 7e) of the rigid element of the parallelogram articulating it to the undercarriage (5, 6).

9. A vehicle according to any one of claims 2 to 8, characterized in that one (10) of the elements of the parallelogram connecting the chassis (1) to the undercarriage (5, 6) is provided with a means for adjusting its length, to cause the horizontal base of the chassis (1) to vary.

10. A vehicle according to any one of the preceding claims, characterized in that the chassis is made of two parts capable of being folded against one another in the transport or displacement position.

## Patentansprüche

1. Fahrzeug, insbesondere landwirtschaftliches Fahrzeug, mit Arbeitsorganen, die an einem mit einem Rädersatz versehenen Gestell gehalten sind, und mit Verbindungsmitteln, die den Rädersatz mit dem Gestell verbinden, dadurch gekennzeichnet, daß die Verbindungsmittel (7, 10, 16) dazu ausgebildet sind, den Rädersatz (5, 6) in bezug auf das Gestell (3, 4) zu verstellen, zwischen einer ersten abgesenkten Arbeitsposition (Figur 2), in der die Arbeitsorgane in Funktion sind, wahrend der Rädersatz (5, 6) vom Boden abgehoben ist, und einer zweiten angehobenen Fortbewegungsposition (Figur 1), in der die Arbeitsorgane in bezug auf den Boden angehoben sind, auf dem sich der Rädersatz (5, 6) abstützt, wobei die Verbindungsmittel (7, 10, 16) außerdem dazu ausgebildet sind, die Schwenkbewegung des Gestells (1) um eine im wesentlichen waagerechte Achse (9) zu ermöglichen, zwischen der zweiten Fortbewegungsposition und einer dritten Straßentransportposition (Figur 3), in der der Rahmen (1) sich in einer in bezug auf die Horizontale geneigten Ebene befindet, während sich der Rädersatz auf dem Boden abstützt, um den Platzbedarf in Breitenrichtung des Fahrzeugs zu verringern.

2. Fahrzeug nach Anspruch 1, dadurch gekennzeichnet, daß das Gestell (1) mit dem Rädersatz (5, 6) durch zwei Elemente (7, 10) verbunden ist, deren jedes an einem Ende (8, 11) gelenkig mit dem Rädersatz (5, 6) und am anderen Ende (9, 12) gelenkig mit dem Gestell (1) verbunden ist, so daß ein Parallelogramm gebildet wird, wobei ein Mittel wie etwa ein Zylinder (16) die Verformung des Parallelogramms zwischen der ersten abgesenkten Arbeitsposition (Figur 2) und der zweiten angehobenen Fortbewegungsposition (Figur 1) des Gestells ermöglicht.

3. Fahrzeug nach Anspruch 1 oder 2, dadurch gekennzeichnet, daß eines der Elemente (7) ein Mittel wie etwa einen Zylinder (10) aufweist, das es ihm gestattet, seine Länge zu ändern, um das Gestell (1) zwischen seiner zweiten angehobenen Fortbewegungsposition (Figur 1) und seiner dritten geneigten Straßentransportposition (Figur 3) und umgekehrt zu verschwenken.

4. Fahrzeug nach Anspruch 2 oder 3, dadurch gekennzeichnet, daß die Verformung des Parallelogramms, die es gestattet, von der ersten abgesenkten Arbeitsposition (Figur 2) in die zweite angehobene Fortbewegungsposition (Figur 1) überzugehen, mit Hilfe eines Hydraulikzylinders (16) bewirkt wird.

5. Fahrzeug nach einem der Ansprüche 2 bis 4. dadurch gekennzeichnet, daß ein starres Element (7) des Parallelogramms durch einen im wesentlichen rechteckigen Rahmen (7a, 7b, 7c, 7d, 7e) gebildet wird, der den Eintritt eines Rades (6) des Rädersatzes (5, 6) in das Innere dieses Rahmens (7) ermöglicht, wenn das Fahrzeug in der abgesenkten Arbeitsposition ist.

6. Fahrzeug nach einem der Ansprüche 2 bis 5, dadurch gekennzeichnet, daß das Element mit variabler Länge des Parallelogramms, das den Rädersatz mit dem Gestell verbindet, mit Hilfe eines Hydraulikzylinders (10) mit zwei Anschlagpositionen gebildet wird, von denen eine einer Länge entspricht die gleich derjenigen des starren Elements (7) des Parallelogramms ist, während die andere Position der Straßentransportposition entspricht.

7. Fahrzeug nach einem der vorstehenden Ansprüche, dadurch gekennzeichnet, daß ein Mittel (10), das das Verschwenken des Gestells in die Straßentransportposition ermöglicht, in Abhängigkeit von der Art und der Länge der von dem Gestell getragenen Werkzeuge in seiner Ausdehnung einstellbar ist.

8. Fahrzeug nach einem der Ansprüche 2 bis 7, dadurch gekennzeichnet, daß der Anhängepunkt (17) des Gestells an die Zugmaschine mit der Gelenkachse (8, 7e) des starren Elements (7) des Parallelogramms am Rädersatz (5, 6) ausgerichtet ist.

9. Fahrzeug nach einem der Ansprüche 2 bis 8, dadurch gekennzeichnet, daß eines der Elemente (10) des Parallelogramms, das das Gestell (1) mit dem Rädersatz (5, 6) verbindet, mit einem Mittel zur Einstellung seiner Länge versehen ist, um die waagerechte Lagerung des Gestells (1) zu variieren.

10. Fahrzeug nach einem der vorstehenden Ansprüche, dadurch gekennzeichnet, daß das Gestell durch zwei Teile gebildet wird, die in der Transport- oder Fortbewegungsposition zusammenfaltbar sind.
